# EUROPÄISCHE PATENTSCHRIFT

(11) **EP 0 851 730 B1**
(45) Veröffentlichungstag und Bekanntmachung des Hinweises auf die Patenterteilung: **01.08.2001**
(21) Anmeldenummer: 96932523.2
(22) Anmeldetag: 13.09.1996
(51) Int. Cl.: A01N 59/02

(54) **SCHÄDLINGSBEKÄMPFUNGSMITTEL, DAS EINE KOMBINATION AUS EINEM SCHWEFELSPRÜHGRANULAT UND EINEM PYRETHROID ENTHÄLT**
PESTICIDE CONTAINING A COMBINATION OF A SPRAYED GRANULATED SULPHUR AND A PYRETHROID
PESTICIDE CONTENANT UNE ASSOCIATION DE GRANULES DE SOUFRE PULVERISES ET D'UN PYRETHRO DE

(30) Priorität: 23.09.1995 DE 19535403
(43) Veröffentlichungstag der Anmeldung: 08.07.1998
(73) Patentinhaber: BASF AKTIENGESELLSCHAFT, 67056 Ludwigshafen (DE)
(72) Erfinder: STADLER, Reinhold, D-67489 Kirrweiler (DE); KOBER, Reiner, D-67136 Fussgönheim (DE); SCHNEIDER, Karl-Heinrich, D-67271 Kleinkarlbach (DE); HARRIES, Volker, D-67227 Frankenthal (DE); WEINMÜLLER, Egon, D-67117 Limburgerhof (DE); KLEINBACH, Eberhard, D-67061 Ludwigshafen (DE); PARG, Adolf, D-67098 Bad Dürkheim (DE); TIDOW, Jörn, D-68723 Schwetzingen (DE); BRÖCKEL, Ulrich, D-67251 Freinsheim (DE); MEIER, Ulrich, Vila Geni, Lorena, SP (BR); MARQUES OLIVEIRA, Cleide, M., C., Chacara Monte Alegre, Sao Paulo (BR); JÄGER, Karl-Friedrich, D-67117 Limburgerhof (DE); KIESSLING, Ulrich, D-67167 Erpolzheim (DE)
(86) Internationale Anmeldenummer: EP9604026
(87) Internationale Veröffentlichungsnummer: WO9710715

(56) Entgegenhaltungen:
- WO-A-87/03216
- FR-A- 2 545 325
- FR-A- 2 589 325
- GB-A- 2 185 005
- C.TOMLIN: "The Pesticide Manual" 1994 , BRITISH CROP PROTECTION COUNCIL , FARNHAM, GB XP002024147 in der Anmeldung erwähnt siehe Seite 259 - Seite 260, 'cypermethrin', 'APPLICATIONS (Mixtures)' siehe Seite 287 - Seite 289, 'deltamethrin', 'APPLICATIONS (Mixtures)' siehe Seite 934, 'sulfur', APPLICATIONS (Formulation type)'

## Beschreibung

Die vorliegende Erfindung betrifft Schädlingsbekämpfungsmittel, welche eine Wirkstoffkombination bestehend aus
a) einem Schwefel-Sprühgranulat
   und
b) einem Pyrethroid enthalten,
sowie Verfahren zur Herstellung dieser Schädlingsbekämpfungsmittel.

Es ist bekannt, Schwefel als Schädlingsbekämpfungsmittel, in erster Linie als Fungizid, aber auch beispielsweise als Akarizide zu verwenden. Es ist ferner bekannt, Pyrethroide als Insektizide und Akarizide zu verwenden. Es ist ferner bekannt, Schwefel in Kombination mit einem Insektizid, z.B. Paration-methyl, oder einem Pyrethroid wie Cypermethrin oder Deltamethrin als Schädlingsbekämpfungsmittel (The Pesticide Manual, 10. Auflage, S. 934 S.260, S.288, einzusetzen.

Die bekannten Mittel und ihre Formulierungen sind jedoch noch nicht zufriedenstellend, da sie teilweise keine ausreichende Pflanzenschutzwirkung zeigen oder aufgrund ihrer Formulierung, z.B. als Spritzpulver, wegen der Gefahr des Staubens zu einer Gefährdung des Anwenders, z.B. zu Hautreizungen, führen können oder wegen der schlechten Dispergierbarkeit solcher Pulver zur Klumpenbildung in den Spritztanks führen können.

Der vorliegenden Erfindung lag daher die Aufgabe zugrunde, Mischungen und Formulierungen dazu zu finden, mit denen sich Schädlinge wie Insekten und Spinnentiere vorteilhafter bekämpfen lassen und die zusätzlich aufgrund ihrer Formulierung Vorteile in der Anwendung zeigen und die bei verringerter Gesamtmenge an ausgebrachten Wirkstoffen eine verbesserte Wirkung gegen Schädlinge aufweisen (synergistische Mischungen).

Demgemäß wurden die eingangs definierten Mittel gefunden. Es wurde außerdem gefunden, daß sich bei der Anwendung der Wirkstoffkombination aus a) und b) Schädlinge besser bekämpfen lassen als mit den Einzelverbindungen.

Die erfindungsgemäßen Schädlingsbekämpfungsmittel sind geeignet, Schädlinge, insbesondere aus der Klasse der Insekten und Spinnentiere, wirksam zu bekämpfen. Besonders vorteilhaft werden die erfindungsgemäßen Mittel zur Bekämpfung von Schädlingen angewendet, die aufgrund ihrer Lebensweise, bei der sie sich vorwiegend schlecht zugänglichen Orten wie an Blattachsen sowie in Knospen-, Blüten-, Frucht- und Blattanlagen vor der Entfaltung aufhalten, gegenüber üblichen Spritzanwendungen mit Insektiziden wenig exponiert sind, daß die üblicherweise eingesetzten Insektizide häufig nur unzureichend zur Wirkung kommen. Die erfindungsgemäßen Schädlingsbekämpfungsmittel führen dagegen zu einem Austreibungseffekt für diese versteckt sitzenden Zielschädlinge und damit zu deren erhöhter Exposition, die zu einem besseren Bekämpfungserfolg führt.

Als Komponente a) werden für die erfindungsgemäßen Schädlingsbekämpfungsmittel Schwefel-Sprühgranulate verwendet. Im allgemeinem werden als Schwefel-Sprühgranulate, Schwefel - Schmelzsprühgranulate und aus suspendiertem Schwefel hergestellte Schwefel-Sprühgranulate verwendet.

Schwefel-Schmelzsprühgranulate werden z.B. erhalten, indem man elementaren Schwefel, z.B. Schwefelpulver, durch Erhitzen auf Temperaturen von mehr als 120°C zum Schmelzen bringt und die erhaltene Schmelze, gegebenenfalls nach Zugabe von Netzmitteln und Dispergiermitteln in einer geeigneten Sprühvorrichtung, z.B. in einem Sprühturm, unter Ausbildung des Schwefel-Sprühgranulats in der Regel unter Abkühlung versprüht.

Geeignete Netzmittel und Dispergiermittel sind z.B.:
- Fettsäure-Polyoxyethylenester wie Laurylalkohol-Polyoxyethylenetheracetat,
- Alkyl-Polyoxyethylen- oder -Polyoxypropylenether etwa von iso-Tridecylalkohol und Fettalkohol-Polyoxyethylenether,
- Alkylarylalkohol-Polyoxyethylenether wie Octylphenol-Polyoxyethylenether,
- Tributylphenol-Polyoxyethylenether,
- ethoxyliertes iso-Octyl-, Octyl- oder Nonylphenol oder Rizinusöl,
- Sorbitester,
- Arylsulfonsäuren, Alkylsulfonsäuren, Alkylschwefelsäuren,
- Alkali-, Erdalkali- und Ammoniumsalze von Arylsulfonsäuren, z.B. Lignin-, Phenol-, Naphthalin- und Dibutylnaphthalinsulfonsäuren, Alkylsulfonsäuren, Alkylarylsulfonsäuren, Alkyl-, Laurylether- und Fettalkoholschwefelsäuren, Fettsäuren, sulfatierte Hexa-, Hepta- und Octadencanole und Fettalkoholglykolether,
- Kondensationsprodukte von sulfoniertem Naphthalin und seiner Derivate mit Formaldehyd,
- Kondensationsprodukte von Naphthalinsulfonsäuren mit Phenol und Formaldehyd,
- Eiweißhydrolysate und
- insbesondere als Dispergiermittel: Lignin-Sulfitablaugen und Methylcellulose.

Schwefel-Sprühgranulate aus suspendiertem Schwefel werden z.B. in der Weise erhalten, daß zunächst eine Schwefelsuspension hergestellt wird, zweckmäßig in der Weise, daß elementarer Schwefel, z.B. Schwefelpulver, in Wasser suspendiert wird, zweckmäßig unter Zugabe von Netz- und Dispergiermitteln sowie gegebenenfalls unter Zugabe eines Bindemittels. Die Schwefelsuspension wird vorzugsweise in Kugelmühlen oder Rübrwerkskugelmühlen mit Mahlkörpern, beispielsweise Glasmahlkörpern oder anderen mineralischen oder metallischen Mahlkörpern in einer Größe von 0,1 - 30 mm, vorzugsweise 0,6 - 2 mm zerkleinert, bis die mittlere Partikelgröße deutlich kleiner als 10 µm ist. Als Netz- und Dispergiermittel kommen z.B. die vorstehend bei den Schwefel-Schmelzsprühgranulaten genannten Netz- und Dispergiermittel in Betracht.

Geeignete Bindemittel sind z.B. Cellulose-Derivate wie Celluloseester, Celluloseether, z.B. Carboxymethylcellulose, Hydroxypropylmethylcellulose, wasserlösliche Gummen wie Gummi arabicum, Gummi tragacantha, Alginate, Gelatine, Polyvinylpyrrolidone, modifizierte Stärken wie Na-Carboxymethylstärke.

Die so erhaltene Schwefelsuspension mit Anteilen von typischerweise 300 - 800 g/l elementarem Schwefel wird anschließend in einer Sprühvorrichtung, z.B. in einem Sprühturm, bei Temperaturen von im allgemeinen 80 bis 120°C unter Ausbildung des Schwefel-Sprühgranulats versprüht.

Als Pyrethroide, die als Komponente b) für die erfindungsgemäßen Schädlingsbekämpfungsmittel verwendet werden, kommen beispielsweise in Betracht (jeweils Common name gemäß The Pesticide Manual, 10. Auflage): Permethrin, Fenvalerate, Esfenvalerate, Cypermethrin, Alpha-cypermethrin, Deltamethrin, Fenpropathrin, Fluvalinate, Flucythrinate, Cyfluthrin, Acrinathrin, Tralomethrin, Cycloprothrin, Lambda-cyhalothrin, Tefluthrin, Bifenthrin, Transfluthrin, Zeta-Cypermethrin, Fubfenprox, Flufenprox.

Das Gewichtsverhältnis des Schwefelsprühgranulats zum Pyrethroid beträgt in den erfindungsgemäßen Schädlingsbekämpfungsmitteln in der Regel 1000:0,1 bis 1000:500, vorzugsweise 1000:0,1 bis 1000:100, insbesondere 1000:0,1 bis 1000:10. Im allgemeinen enthält das Schädlingsbekämpfungsmittel die Wirkstoffkombination aus a) und b) zu 0,1 bis 100 Gew.%, vorzugsweise zu 0,1 bis 99 Gew.%, insbesondere zu 1 bis 98 Gew.%.

Die Herstellung der erfindungsgemäßen Schädlingsbekämpfungsmittel kann in der Weise erfolgen, daß das Schwefel-Sprühgranulat mit dem auf einem inerten pulverförmigen Trägerstoff fixierten und in pulveriger Formulierung vorliegenden Pyrethroid vermischt wird. Geeignete Mischvorrichtungen sind z.B. Kegelschneckenmischer (Nautamischer) Pflugscharmischer, Trommelmischer. Für die Herstellung der Pyrethroid-Pulverformulierung kommen beispielsweise als inerte Trägerstoffe in Betracht Kieselsäuren, Tonerde, Kieselgel, Kieselgur, Talk, Kaolin, Tone, Quarzsand, Silikate wie Aluminiumsilikate, Magnesiumsilikate, Bentonite, Mcntmorillonite, Attapulgite, Zeolithe. Mit Vorteil werden hochdisperse Kieselsäuren, die z.B. als Sipernat® bekannt sind, verwendet.

Im allgemeinen erhält man das auf das Trägermaterial fixierte Pyrethroid in der Weise, daß das Pyrethroid als solches oder als Lösung in einem organischen Lösungsmittel auf das Trägermaterial aufgesprüht wird. Geeignete Lösungsmittel sind z.B. Ketone wie Aceton, Ether wie Tetrahydrofuran, Alkohole wie Methanol, Ethanol, Propanole, Ester wie Essigester, halogenierte Kohlenwasserstoffe, z.B. Methylenchlorid oder 1,2-Dichlorethen. Das Gewichtsverhältnis von Pyrethroid zu inertem Trägermaterial beträgt im allgemeinen 0,1:100 bis 10:1, vorzugsweise 0,5:100 bis 1:1.

Ein weiteres Verfahren zur Herstellung der erfindungsgemäßen Schädlingsbekämpfungsmittel besteht darin, daß das Pyrethroid als solches oder als Lösung in einem organischen Lösungsmittel, gegebenenfalls mit weiteren Adjuvantien wie Netzmittel und Bindemittel auf das Schwefel-Sprühgranulat, das z.B. in einer Sprühwirbelschicht vorgelegt wird, aufgesprüht wir.

Geeignete Lösungsmittel für die pyrethroide sind z.B. Ketone wie Aceton, Ether wie Tetrahydrofuran, Alkohole wie Methanol, Ethanol, Propanole, Ester wie Essigester, halogenierte Kohlenwasserstoffe, z.B. Methylenchlorid oder 1,2-Dichlorethen.

Als Netzmittel kommen beispielsweise in Betracht:
- Polyoxyethylen-/Polyoxypropylen-Blockpolymere, z.B. wie aus US-A 2,677,700, US-A 2,674,619 und EP-A 298 909 bekannt; besonders geeignete Produkte dieser Gruppe sind beispielsweise unter der Bezeichnung PLURONIC® (BASF Wyandotte Corp.) im Handel erhältlich, z.B. PLURONIC® PE 3100, PE 6100 und PE 8100).
- Polyoxyethylen- oder Polyoxyethylen-/Polyoxypropylen-Fettalkohole, z.B. wie aus GB-A 643 422 oder Satkowski et al., Ind. Eng. Chem. 49 (1957) 1875 bekannt; besonders geeignete Produkte dieser Gruppe sind beispielsweise unter der Bezeichnung WETTOL® LF (Fa.: BASF) im Handel erhältlich.
- Polyoxyethylen- oder Polyoxyethylen-/Polyoxypropylen-Fettamine, z.B. wie aus Stache, Tensidtaschenbuch, Carl Hauser-Verlag München, Wien, 2. Ausgabe, S. 133 bekannt; besonders geeignete Produkte dieser Gruppe sind beispielsweise unter der Bezeichnung ATPLUS® (Fa.: Atlas) und Ethomeen® (Fa. Akzo) im Handel erhältlich.
- Fettsäureester bzw. Fettsäureesterethoxylate, z.B. wie aus US-A 1,914,100 bekannt; besonders geeignete Produkte dieser Gruppe sind beispielsweise unter der Bezeichnungen ARLACEL® , ATMER® , ATMOS® und ATPET® (Fa.: Atlas) im Handel erhältlich.
- Polyoxyethylen- oder Polyoxyethylen-/Polyoxypropylen-Oxyalkohole, z.B. wie aus US-A 2,508,035, US-A 2,508,036, US-A 2,617,830 bekannt; besonders geeignete Produkte dieser Gruppe sind beispielsweise unter der Bezeichnung LUTENSOL AO® und LUTENSOL TO® (Fa.: BASF) im Handel erhältlich.
- Polyoxyethylen- oder Polyoxyethylen-/Polyoxypropylen-Alkylphenole, z.B. wie aus FR-A 842 943 bekannt; besonders geeignete Produkte dieser Gruppe sind beispielsweise unter der Bezeichnung LUTENSOL AP® (Fa.: BASF) im Handel erhältlich.

Geeignete Bindemittel sind z.B. Cellulose-Derivate wie Celluloseester, Celluloseether, z.B. Carboxymethylcellulose, Hydroxypropylmethylcellulose, wasserlösliche Gummen wie Gummi arabicum, Gummi tragacantha, Alginate, Gelatine, Polyvinylpyrrolidone, modifizierte Stärken wie Na-Carboxymethylstärke.

Die erfindungsgemäßen Schädlingsbekämpfungsmittel können außerdem in der Weise hergestellt werden, daß das Pyrethroid als Emulsion auf das Schwefel-Sprühgranulat aufgesprüht wird, wobei die Emulsion neben Emulgatoren nach weitere Adjuvantien wie Netzmittel und Bindemittel enthalten kann. Als Netzmittel und Bindemittel kommen z.B. die bereits vorstehend genannten Netz- und Bindemittel in Betracht. Geeignete Emulgatoren sind z.B.:
- Fettsäure-Polyoxyethylenester wie Laurylalkohol-Polyoxyethylenetheracetat,
- Alkyl-Polyoxyethylen- oder -Polyoxypropylenether etwa von iso-Tridecylalkohol und Fettalkohol-Polyoxyethylenether,
- Alkylarylalkohol-Polyoxyethylenether wie Octylphenol-Polyoxyethylenether,
- Tributylphenol-Polyoxyethylenether,
- ethoxyliertes iso-Octyl-, Octyl- oder Nonylphenol oder Rizinusöl,
- Sorbitester,
- Arylsulfonsäuren, Alkylsulfonsäuren, Alkylschwefelsäuren,
- Alkali-, Erdalkali- und Ammoniumsalze von Arylsulfonsäuren, z.B. Lignin-, Phenol-, Naphthalin- und Dibutylnaphthalinsulfonsäuren, Alkylsulfonsäuren, Alkylarylsulfonsäuren, Alkyl-, Laurylether- und Fettalkoholschwefelsäuren, Fettsäuren, sulfatierte Hexa-, Hepta- und Octadecanole und Fettalkoholglykolether,
- Kondensationsprodukte von sulfoniertem Naphthalin und seiner Derivate mit Formaldehyd,
- Kondensationsprodukte von Naphthalinsulfonsäuren mit Phenol und Formaldehyd und
- Eiweißhydrolysate.

Weiter können die erfindungsgemäßen Schädlingsbekämpfungsmittel schon sogleich bei der Herstellung der Schwefel-Sprühgranulate in der Weise erhalten werden, daß bei der Herstellung der Schwefel-Schmelzsprühgranulate das Pyrethroid der Schwefel-Schmelze vor der Verdüsung zum Schmelzsprühgranulat zudosiert wird bzw. daß bei der Herstellung der Schwefel-Sprühgranulate aus suspendiertem Schwefel der suspendierte Schwefel gemeinsam mit dem Pyrethroid, z.B. in suspendierter Form oder in der vorstehend beschriebenen unter Verwendung eines Trägerstoffs erhaltenen Pyrethroid-Pulverformulierung zum Sprühgranulat versprüht wird.

Die erfindungsgemäßen Schädlingsbekämpfungsmittel weisen aufgrund ihrer Formulierung ein sehr gute Dispersionsverhalten bei der Sprühanwendung sowie eine sehr gute Stabilität bei der Lagerung auf, bei der keine Entmischung und auch nach thermischer Belastung keine Verbackung auftritt.

Die erfindungsgemäßen Schädlingsbekämpfungsmittel sind geeignet, Schädlinge aus der Klasse der Insekten und Spinnentiere wirksam zu bekämpfen. Sie können im Pflanzenschutz sowie auf dem Hygiene-, Vorratsschutz- und Veterinärsektor als Schädlingsbekämpfungsmittel eingesetzt werden, wobei der Einsatz im Pflanzenschutz und Veterinärsektor bevorzugt wird.

Zu den schädlichen Insekten gehören:
aus der Ordnung der Schmetterlinge (Lepidoptera) beispielsweise Adoxophyes orana, Agrotis ypsilon, Agrotis segetum, Alabama argillacea, Anticarsia gemmatalis, Argyresthia conjugella, Autographa gamma, Cacoecia murinana, Capua reticulana, Choristoneura fumiferana, Chilo partellus, Choristoneura occidentalis, Cirphis unipuncta, Cnaphalocrocis medinalis, Crocidolomia binotalis, Cydia pomonella, Dendrolimus pini, Diaphania nitidalis, Diatraea grandiosella, Earias insulana, Elasmopalpus lignosellus, Eupoecilia ambiguella, Feltia subterranea, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera scitella, Lithocolletis blancardella, Lobesia botrana, Loxostege sticticalis, Lymantria dispar, Lymantria monacha, Lyonetia clerkella, Manduca sexta, Malacosoma neustria, Mamestra brassicae, Mocis repanda, Operophthera brumata, Orgyia pseudotsugata, Ostrinia nubilalis, Pandemis heparana, Panolis flammea, Pectinophora gossypiella, Phthorimaea operculella, Phyllocnistis citrella, Pieris brassicae, Plathypena scabra, Platynota stultana, Plutella xylostella, Prays citri, Prays oleae, Prodenia sunia, Prodenia ornithogalli, Pseudoplusia includens, Rhyacionia frustrana, Scrobipalpula absoluta, Sesamia inferens, Sparganothis pilleriana, Spodoptera frugiperda, Spodoptera littoralis, Spodoptera litura, Syllepta derogata, Synanthedon myopaeformis, Thaumatopoea pityocampa, Tortrix viridana, Trichoplusia ni, Tryporyza incertulas, Zeiraphera canadensis,
ferner Galleria mellonella und Sitotroga cerealella, Ephestia cautella, Tineola bisselliella;
aus der Ordnung der Käfer (Coleoptera) beispielsweise Anthonomus grandis, Anthonomus pomorum, Apion vorax, Atomaria linearis, Blastophagus piniperda, Cassida nebulosa, Cerotoma trifurcata, Ceuthorhynchus assimilis, Ceuthorhynchus napi, Chaetocnema tibialis, Conoderus vespertinus, Crioceris asparagi, Dendroctonus refipennis, Diabrotica longicornis, Diabrotica 12-punctata, Diabrotica virgifera, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Ortiorrhynchus sulcatus, Otiorrhynchus ovatus, Phaedon cochleariae, Phyllopertha horticola, Phyllophaga sp., Phyllotreta chrysocephala, Phyllotreta nemorum, Phyllotreta striolata, Popillia japonica, Psylliodes napi, Scolytus intricatus, Sitona lineatus,
ferner Bruchus rufimanus, Bruchus pisorum, Bruchus lentis, Sitophilus granaria, Lasioderma serricorne, Oryzaephilus surinamensis, Rhyzopertha dominica, Sitophilus oryzae, Tribolium castaneum, Trogoderma granarium, Zabrotes subfasciatus;
aus der Ordnung der Zweiflügler (Diptera) beispielsweise Anastrepha ludens, Ceratitis capitata, Contarinia sorghicola, Dacus cucurbitae, Dacus oleae, Dasineura brassicae, Delia coarctata, Delia radicum, Hydrellia griseola, Hylemyia platura, Liriomyza sativae, Liriomyza trifolii, Mayetiola destructor, Orseolia oryzae, Oscinella frit, Pegomya hyoscyami, Phorbia antiqua, Phorbia brassicae, Phorbia coarctata, Rhagoletis cerasi, Rhagoletis pomonella,
ferner Aedes aegypti, Aedes vexans, Anopheles maculipennis, Chrysomya bezziana, Chrysomya hominivorax, Chrysomya macellaria, Cordylobia anthropophaga, Culex pipiens, Fannia canicularis, Gasterophilus intestinalis, Glossina morsitans, Haematobia irritans, Haplodiplosis equestris, Hypoderma lineata, Lucilia caprina, Lucilia cuprina, Lucilia sericata, Musca domestica, Muscina stabulans, Oestrus ovis, Tabanus bovinus, Simulium damnosum;
aus der Ordnung der Thripse (Thysanoptera) beispielsweise Frankliniella fusca, Frankliniella occidentalis, Frankliniella tritici, Haplothrips tritici, Scirtothrips citri, Thrips oryzae, Thrips palmi, Thrips tabaci;
aus der Ordnung der Hautflügler (Hymenoptera) beispielsweise Athalia rosae, Atta cephalotes, Atta sexdens, Atta texana, Hoplocampa minuta, Hoplocampa testudinea, Iridomyrmes humilis, Iridomyrmex purpureus, Monomorium pharaonis, Solenopsis geminata, Solenopsis invicta, Solenopsis richteri;
aus der Ordnung der Wanzen (Heteroptera) beispielsweise Acrosternum hilare, Blissus leucopterus, Cyrtopeltis notatus, Dysdercus cingulatus, Dysdercus intermedius, Eurygaster integriceps, Euschistus impictiventris, Leptoglossus phyllopus, Lygus hesperus, Lygus lineolaris, Lygus pratensis, Nezara viridula, Piesma quadrata, Solubea insularis, Thyanta perditor;
aus der Ordnung der Pflanzensauger (Homoptera) beispielsweise Acyrthosiphon onobrychis, Acyrthosiphon pisum, Adelges laricis, Aonidiella aurantii, Aphidula nasturtii, Aphis fabae, Aphis gossypii, Aphis pomi, Aulacorthum solani, Bemisia tabaci, Brachycaudus cardui, Brevicoryne brassicae, Dalbulus maidis, Dreyfusia nordmannianae, Dreyfusia piceae, Dysaphis radicola, Empoasca fabae, Eriosoma lanigerum, Laodelphax striatella, Macrosiphum avenae, Macrosiphum euphorbiae, Macrosiphon rosae, Megoura viciae, Metopolophium dirhodum, Myzus persicae, Myzus cerasi, Nephotettix cincticeps, Nilaparvata lugens, Perkinsiella saccharicida, Phorodon humuli, Psylla mali, Psylla piri, Psylla pyricola, Rhopalosiphum maidis, Schizaphis graminum, Sitobion avenae, Sogatella furcifera, Toxoptera citricida, Trialeurodes abutilonea, Trialeurodes vaporariorum, Viteus vitifolii;
aus der Ordnung der Termiten (Isoptera) beispielsweise Calotermes flavicollis, Leucotermes flavipes, Macrotermes subhyalinus, Odontotermes formosanus, Reticulitermes lucifugus, Termes natalensis;
aus der Ordnung der Geradflügler (Orthoptera) beispielsweise Gryllotalpa gryllotalpa, Locusta migratoria, Melanoplus bivittatus, Melanoplus femur-rubrum, Melanoplus mexicanus, Melanoplus sanguinipes, Melanoplus spretus, Nomadacris septemfasciata, Schistocerca americana, Schistocerca peregrina, Stauronotus maroccanus, Schistocerca gregaria,
ferner Acheta domestica, Blatta orientalis, Blattella germanica, Periplaneta americana;
Zur Klasse der Spinnentiere (Arachnoidea)gehören beispielsweise phytophage Milben (Acari) wie Aculops lycopersicae, Aculops pelekassi, Aculus schlechtendali, Brevipalpus phoenicis, Bryobia praetiosa, Eotetranychus carpini, Eutetranychus banksii, Eriophyes sheldoni, Oligonychus pratensis, Panonychus ulmi, Panonychus citri, Phyllocoptruta oleivora, Polyphagotarsonemus latus, Tarsonemus pallidus, Tetranychus cinnabarinus, Tetranychus kanzawai, Tetranchus pacificus, Tetranychus urticae, Zecken wie Amblyomma americanum, Amblyomma variegatum, Argas persicus, Boophilus annulatus, Boophilus decoloratus, Boophilus microplus, Dermacentor silvarum, Hyalomma truncatum, Ixodes ricinus, Ixodes rubicundus, Ornithodorus moubata, Otobius megnini, Rhipicephalus appendiculatus und Rhipicephalus evertsi sowie tierparasitische Milben wie Dermanyssus gallinae, Psoroptes ovis und Sarcoptes scabiei.

Bei der Anwendung der erfindungsgemäßen Schädlingsbekämpfungsmittel in der Veterinärmedizin werden sie vorteilhaft zur Bekämpfung von Ektoparasiten verwendet.

Die Aufwandmenge der Wirkstoffkombination zur Bekämpfung von Schädlingen beträgt unter Freilandbedingungen im allgemeinen 0,01 bis 50 kg/ha vorzugsweise 0,05 bis 20 kg/ha, insbesondere 0,1 bis 10 kg/ha.

Die nachfolgenden Beispiele veranschaulichen die Erfindung.

### A) Formulierungsbeispiele

### 1. Herstellung von Schwefel-Sprühgranulaten

### Beispiel A

### Herstellung eines Schwefel-Schmelzsprühgranulats

Schwefelpulver wird auf Temperaturen oberhalb von 120°C erhitzt und geschmolzen. Die Schmelze wird mit ligninsulfonsaurem Natrium als Netzmittel und Kieselsäure als Dispergiermittel vermischt. Das Schmelzgemisch wird mit einer 2-Stoffdüse in einem Sprühturm versprüht. Es entsteht ein leicht dipergierbares Sprühgranulat (Partikeldurchmesser: 60<x<300 µm), das 0,3 Gew.% Dispergiermittel und ca. 20 Gew.% Netzmittel enthält. Der Rest ist Schwefel.

### Beispiel B

### Herstellung von Schwefel-Sprühgranulat aus suspendiertem Schwefel

Schwefelpulver wird in Wasser suspendiert, Natriumligninsulfonat wird als Dispergiermittel zugegeben, als Netzmittel wird Nonylphenoletoxilat zugegeben. Die Suspension wird auf eine pumpfähige Konzentration eingestellt, d.h. zweckmäßig eine Schwefelkonzentration von 20 bis 40 Gew.-%. Bezogen auf die gesamte Trockenmasse hat Schwefel einen Anteil von 80 Gew.-%, das Natriumligninsulfonat im Beispiel eine Konzentration von 19 Gew.-% und das Netzmittel von 1 Gew.-%. Die Zugabe von einem Antischaummittel, z.B. Silikon in einer Konzentration von bis zu 0,1 %, beschleunigt die Mahlung. Der Ansatz wird in einer Laborrührwerksmühle zu einer sprühfähigen Suspension vermahlen. Die Suspension wird in einem Sprühturm in einer Zweistoffdüse zu einem Mikrogranulat versprüht. Man erhält ein leicht dispergierbares Granulat in der Zusammensetzung:
79 - 80 Gew.-% Schwefel
19 Gew.-% Natriumligninsulfat
1 Gew.-% Nonylphenol (Netzmittel)
0,1 Gew.-% Silicon

### 2. Herstellung einer erfindungsgemäßen Wirkstoffkombination

### Beispiel 1

In einem ersten Schritt wird von dem Pyrethroid Cypermethrin eine Pulverformulierung in der Weise hergestellt, daß Cypermethrin in Aceton gelöst wird und die Acetonlösung des Cypermethrins in einem Sprühwirbelbett auf Kieselsäurepulver als Trägerstoff aufgesprüht wird. Man erhält ein Cypermethrin/Trägerstoff-Pulver mit einem Gehalt von 32,4 Gew.-% Cypermethrin.

Das Cypermethrin/Trägerstoff-Pulver wird anschließend in einem Nauta-Mischer mit Schwefel-Schmelzsprühgranulat aus Beispiel A vermischt. Man erhält eine Fertigformulierung als dispergierbares Granulat mit einem Schwefelgehalt von 80 Gew.-% und einem Cypermethringehalt von 5 Gew.-%. Das Produkt läßt sich sehr gut benetzen und löst sich nach Zugabe in Wasser sofort auf unter Bildung einer verarbeitungsstabilen Suspension, bei der keine Teile aussedimentieren.

### Beispiel 2

Ein gemäß Beispiel A erhaltenes Schwefel-Schmelzsprühgranulat wird in einer Sprühwirbelschicht vorgelegt. Auf dieses Trägergranulat wird eine Lösung von Cypermethrin in Aceton (25 Gew.%ig), die außerdem nach 4 Gew.% eines Polyoxyethylen-/Polyoxypropylen-Fettalkohols enthielt, aufgesprüht. Auf eine Vorlage von 2 kg des Schwefel-Schmelzspruhgranulats wird eine 100 g Cypermethrin enthaltende Menge der Aceton-Lösung mit einer Sprürate von 30 g/min Acetonlösung aufgesprüht. Das Schwefel-Schmelzsprühgranulat wird dabei mit einer Luftmenge von 130 m³/h fluidisiert. Die Aceton-Lösung wird mit einem Sprühdruck von 1,5 bar versprüht. Es wird ein leicht dispergierbares Sprühgranulat erhalten, daß mit Wasser eine verarbeitungsstabile Suspension ergibt, bei der keine Teile aussedimentieren. Diese Herstellvariante ist von Interesse für Cypermethrin-Konzentrationen von größer als etwa 5 %.

Ein gemäß diesem Beispiel 2 erhaltenes erfindungsgemäßes Sprühgranulat wird in seinen Dispergiereigenschaften mit einer herkömmlichen Pulvermischung aus Netzschwefel und Pyrethroid verglichen. Dabei wurden die in der nachfolgenden Tabelle angegebenen Ergebnisse erhalten:

| | | |
|---|---|---|
| Kriterium | Netzschwefel + 0,13 % Pyrethroid | Sprühgranulat gemäß Beispiel 2 |
| Auflösung | stark verzögerter Verfall | schneller Verfall |
| Sediment nach 30 min | 3,25 ml | 1,4 ml |
| Griesbildung | sehr starke Griesbildung | schwache Griesbildung |
| Schaumbildung | keine | geringe, schnell rückbildende Schaumbildung |

Die Ergebnisse zeigen, daß die Dispergiereigenschaften der erfindungsgemäßen Formulierung deutlich gegenüber den herkömmlichen Mitteln verbessert sind.

### Beispiel 3

a) Elementarer, fein aufgemahlener Schwefel wird mit 18 Gew.-% Natriumligninsulfonat als Dispergiermittel versetzt, wobei eine pulverige Schwefelformulierung erhalten wird.
b) Cypermethrin/Trägerstoff-Pulver wird, wie im ersten Absatz von Beispiel 1 beschrieben, hergestellt.

Die vorstehend gemäß Ziffer a) und b) erhaltenen pulverförmigen Komponenten werden gemischt und in Wasser suspendiert. Die Suspension wird in einem Sprühturm zu einem Schwefel-Sprühgranulat versprüht, welches 5 Gew.-% Cypermethrin und 80 Gew.-% Schwefel enthält. Das erhaltene Schwefel-Sprühgranulat ist leicht dispergierbar und ergibt mit Wasser eine verarbeitungsstabile Suspension, bei der keine Teile aussedimentieren.

Diese Variante ist insbesondere für kleinere Konzentrationen von Pyrethroiden mit geringer Schmelztemperatur oder für kristallin vorliegende Pyrethroide mit Schmelzpunkten über 70°C in einem weiten Konzentrationsbereich einsetzbar.

### Beispiel 4

In einem Labormischer wurden 40 g Deltamethrin, 15 g Formaldehyd-Harnstoff-Phenol sulfosäure-Kondensat als Natriumsalz, 5 g Formaldehyd-Phenolsulfosäure-Kondensat als Natriumsalz, 5 g Diisobutylnaphthalinsulfonsäure als Natriumsalz, 25 g Kaolin und 10 g Fällungskieselsäure miteinander vermischt und diese Mischung in einer Laborrotorschnellmühle zu einem wasserdispergierbaren Pulver (Produkt 1) vermahlen.

In einem zweiten Schritt wurden in einem Würfelmischer 987,5 g eines wasserdispergierbaren Granulats bestehend aus 81 % Schwefel, 17 % Natriumligninsulfonat und 2 % Restfeuchte zusammen mit 12,5 g des Produktes 1 während 60 Minuten mit einer Drehzahl von 30 Upm gemischt. Es resultierte ein homogenes wasserdispergierbares Granulat von Schwefel und Deltamethrin. Das Mischprodukt war gut fließfähig, zeigte geringe Staubentwicklung und dispergierte beim Einbringen in Wasser schnell und vollständig. Es resultierte eine homogene Dispersion mit einer Schwebefähigkeit von 93,9 % (Methode CIPAC MT 168).

### Beispiel 5

Es wird ein Masterbatch aus Cypermethrin und einem Dispergiermittel analog Beispiel 4 abgemischt. Diese Mischung wird bis zum Schmelzpunkt erwärmt und in einem Pflugscharmischer, in dem ein Gemisch aus Kaolin und Fällungskieselsäure vorgelegt wird, mit einem schnell rotierenden Dispergator über eine Zweistoff-Düse unter Druck von mehr als 10 bar zudosiert. Durch diese Mischung ist ein Masterbatch erhältlich.

Gemäß der im vorstehenden Absatz beschriebenen Arbeitsweise werden

| | |
|---|---|
| 100 g | Cypermethrin verdüst mit einer Rate von 10 g/min. |
| 40 g | Kondensat als Na-Salz, |
| 10 g | Diisobutylnaphthalinsulfonsäure als Na-Salz, |
| 50 g | Kaolin und |
| 25 g | Fällungskieselsäure |

im Mischer vorgelegt.

Dieses Masterbatch wird mit einem Schwefelgranulat in einem Schneckenkonusmischer analog Beispiel 4 vermischt.

### B) Anwendungsbeispiele

### 1. Bekämpfung blattfressender Eulenraupen (Spodoptera frugiperda) in Mais (Brasilien)

Die Untersuchungen wurden im Freilandversuch(Blockanlage mit 4 Wiederholungen, 80 m²/Parzelle mit einer Wasseraufwandmenge von 200 - 400 l/ha durchgeführt.

2 Stunden nach Behandlung wurde in den Schwefel-behandelten Parzellen eine im Vergleich zu nicht behandelten Flächen erhöhte Mobilität (Austreibungseffekt) der Insekten beobachtet.

Die Ergebnisse waren wie folgt:

| | Dosierung Produkt | % Wirkung (Mortalität) | |
|---|---|---|---|
| | | 7 Tage nach Anwendung | 12 Tage nach Anwendung |
| β-Cyfluthrin | 0,15 l/ha | 62 | 65 |
| β-Cyfluthrin in Kombination mit Schwefel-Sprühqranulat | 0,15 l/ha + 1,0 kg/ha | 88 | 85 |
| β-Cyfluthrin | 0,2 l/ha | 85 | 63 |
| β-Cyfluthrin in Kombination mit Schwefel-Sprühgranulat | 0,2 l/ha + 1,0 kg/ha | 92 | 85 |
| Unbehandelte Kontrolle | | (62)* | (71)* |

| | | | |
|---|---|---|---|
| *) = % Pflanzen mit Raupenbefall | | | |

### 2. Bekämpfung von Spinnmilben (Tetranychus spp.) in Baumwolle der Sorte Mahyco 8 (Indien)

Der zeitliche Ablauf der Untersuchungen war wie folgt:

| | |
|---|---|
| Saattermin | 26.06.1994 |
| | |
| 1. Behandlung | 01.09.1994 |
| 2. Behandlung | 12.09.1994 |
| | |
| 1. Erntetermin | 14.11.1994 |
| 2. Erntetermin | 27.11.1994 |

Dabei wurden folgende Ergebnisse erzielt:

| Behandlung | Dosierung g aktive Substanz (a.S.)/ha | Gesamtertrag (kg/ha) an Baumwolle |
|---|---|---|
| Unbehandelte Kontrolle | - | 650 |
| Cypermethrin | 60 | 962 |
| Schwefel-Sprühgranulat | 625 | 700 |
| Cypermethrin in Kombination mit | 60 | 1062 |
| Schwefel-Sprühgranulat | 625 | |

### 3. Bekämpfung von Spinnmilben (Tetranychus sp.) und Fruchtbohrern (Leucinodes sp.) in Aubergine (Solanum melongena)

Es wurden 3 Behandlungen wie folgt durchgeführt:

| | |
|---|---|
| 1. Behandlung | 16.12.1993 |
| 2. Behandlung | 23.03.1994 |
| 3. Behandlung | 10.06.1994 |

Dabei wurden folgende Ergebnisse erzielt:

| | | % Mortalität (Milben) | | |
|---|---|---|---|---|
| | Dosierung g a.S./ha | 3 Tage nach Anwendung | 7 Tage nach Anwendung | Relativer Ertrag |
| Unbehandelte Kontrolle | - | - | - | 100 |
| Cypermethrin | 50 | 19*) | 46*) | 160 |
| | | 9**) | 43**) | |
| | | 0***) | 13***) | |
| Schwefel-Sprühgranulat | 625 | 55*) | 58*) | 177 |
| | | 57**) | 47**) | |
| | | 60***) | 43***) | |
| Cypermethrin in Kombination mit Schwefel-Sprühgranulat | 50 | 66*) | 71*) | 185 |
| | | 73**) | 71**) | |
| | 625 | 82***) | 73***) | |

| | | | | |
|---|---|---|---|---|
| *) 1. Behandlung | | | | |
| **) 2. Behandlung | | | | |
| ***)3. Behandlung | | | | |

### 4. Bekämpfung von Spinnmilben (Tetranychus sp.) in Aubergine

Die Ergebnisse waren wie folgt:

| | % Wirkung (Mortalität) | | | |
|---|---|---|---|---|
| Behandlung | g a.S./ha | 1 Tag nach Anwendung | 3 Tage nach Anwendung | 7 Tage nach Anwendung |
| Cypermethrin | 50 | 3 | 4 | 13 |
| Schwefel-Sprühgranulat | 500 | 58 | 60 | 43 |
| Cypermethrin in Kombination mit Schwefel-Sprühgranulat | 50 | 72 | 82 | 72 |
| | 500 | | | |
| Unbehandelte Kontrolle | - | - | - | - |

### 5. Bekämpfung von Weichhautmilben (Polyphagotarsonemus latus) in Chili

Bei der Bekämpfung von Weichhautmilben in Chili-Kulturen wurden die folgenden Ergebnisse erzielt:

| | % Wirkung (Mortalität) | | |
|---|---|---|---|
| Behandlung | g a.S./ha | 3 Tage nach Anwendung | 7 Tage nach Anwendung |
| Cypermethrin | 50 | 68 | 68 |
| Schwefel-Sprühgranulat | 500 | 58 | 71 |
| Cypermethrin in Kombination mit Schwefel-Sprühgranulat | 50 | 75 | 80 |
| | 500 | | |

### 6. Bekämpfung von Spinnmilben (Tetranychus macfarlaner) in Aubergine

Die Bekämpfung der Spinnmilben in den Aubergine-Kulturen erfolgte in 2 Behandlungen. Die Ergebnisse waren wie folgt:

| | | Anzahl Milben / 3 Blätter | | | | | |
|---|---|---|---|---|---|---|---|
| | | 1. Behandlung | | | 2. Behandlung | | |
| | g.a.S./ha | 1 DAT | 3 DAT | 7 DAT | 1 DAT | 3 DAT | 7 DAT |
| Cypermethrin | 50 | 208 | 230 | 247 | 104 | 100 | 127 |
| Schwefel-Sprühgranulat | 500 | 166 | 70 | 86 | 90 | 61 | 69 |
| Cypermethrin + | 50 | 155 | 56 | 71 | 102 | 49 | 41 |
| Schwefel-Sprühgranulat | 500 | | | | | | |
| Unbeh. Kontrolle | - | 207 | 223 | 215 | 104 | 118 | 146 |

(DAT = Tage nach Anwendung)

## Patentansprüche

1. Schädlingsbekämpfungsmittel, enthaltend eine Wirkstoffkombination bestehend aus
a) einem Schwefel-Sprühgranulat
und
b) einem Pyrethroid.

2. Schädlingsbekämpfungsmittel nach Anspruch 1, dadurch gekennzeichnet, daß es ein oder mehrere Pyrethroide ausgewählt aus der folgenden Gruppe enthält:
| | | | |
|---|---|---|---|
| Permethrin, | Fenvalerate, | Esfenvalerate, | Cypermethrin, |
| Alphacypermethrin, | Deltamethrin, | Fenpropathrin, | Fluvalinate, |
| Flucythrinate, | Cyfluthrin, | Acrinathrin, | Tralomethrin, |
| Cycloprothrin, | Lambdacyhalothrin, | Tefluthrin, | Bifenthrin, |
| Transfluthrin, | Zeta-Cypermethrin, | Fubfenprox, | Flufenprox. |

3. Schädlingsbekämpfungsmittel nach Anspruch 1, dadurch gekennzeichnet, daß es 0,1 bis 100 Gew.% Wirkstoffkombination enthält.

4. Schädlingsbekämpfungsmittel nach Anspruch 1, dadurch gekennzeichnet, daß das Gewichtsverhältnis des Schwefel-Sprühgranulats a) zum Pyrethroid b) 1000:0,1 bis 1000:500 beträgt.

5. Schädlingsbekämpfungsmittel nach Anspruch 1, dadurch gekennzeichnet, daß als Komponente a) ein Schwefel-Schmelzsprühgranulat verwendet wird.

6. Schädlingsbekämpfungsmittel nach Anspruch 1, dadurch gekennzeichnet, daß als Komponente a) ein aus suspendiertem Schwefel hergestelltes Schwefel-Sprühgranulat verwendet wird.

7. Schädlingsbekämpfungsmittel nach Anspruch 1, dadurch gekennzeichnet, daß die Wirkstoffkombination durch Vermischen des Schwefel-Sprühgranulats mit pulverförmigem auf einem inerten Träger fixiertem Pyrethroid erhalten wird.

8. Schädlingsbekämpfungsmittel nach Anspruch 1, dadurch gekennzeichnet, daß die Wirkstoffkombination durch Aufsprühen des Pyrethroids als solches oder des in einem organischen Lösungsmittel gelösten Pyrethroids auf das Schwefel-Sprühgranulat erhalten wird.

9. Schädlingsbekämpfungsmittel nach Anspruch 8, dadurch gekennzeichnet, daß das Aufsprühen des Pyrethroids bzw. des in einem organischen Lösungsmittel gelösten Pyrethroids auf das Schwefel-Sprühgranulat zusammen mit weiteren Adjuvantien erfolgt.

10. Schädlingsbekämpfungsmittel nach Anspruch 1, dadurch gekennzeichnet, daß die Wirkstoffkombination durch Aufsprühen des Pyrethroids als Emulsion auf das Schwefel-Sprühgranulat erhalten wird.

11. Verfahren zur Herstellung des Schädlingsbekämpfungsmittels nach Anspruch 1, dadurch gekennzeichnet, daß man das auf einem Trägermaterial fixierte Pyrethroid in Pulverform auf das Schwefel-Sprühgranulat aufträgt.

12. Verfahren nach Anspruch 11, zur Herstellung des Schädlingsbekämpfungsmittels nach Anspruch 1, dadurch gekennzeichnet, daß man das auf dem Trägermaterial fixierte Pyrethroid in der Weise erhält, daß das Pyrethroid als solches oder als Lösung in einem organischen Lösemittel auf das Trägermaterial aufgesprüht wird.

13. Verfahren zur Herstellung des Schädlingsbekämpfungsmittels nach Anspruch 1, dadurch gekennzeichnet, daß das Pyrethroid als solches oder als Lösung in einem organischen Lösungsmittel auf das Schwefel-Sprühgranulat aufgesprüht wird.

14. Verfahren zur Herstellung des Schädlingsbekämpfungsmittels nach Anspruch 1, dadurch gekennzeichnet, daß das Pyrethroid als Emulsion auf das Schwefel-Sprühgranulat aufgesprüht wird.

15. Verfahren zur Herstellung des Schädlingsbekämpfungsmittels nach Anspruch 1, dadurch gekennzeichnet, daß eine gemeinsame Suspension von pulverförmigem Schwefel und Pyrethroid zu einem Pyrethroid-haltigen Schwefel-Sprühgranulat versprüht wird.

16. Verfahren zur Bekämpfung von Schädlingen, dadurch gekennzeichnet, daß man die Schädlinge und/oder die von Schädlingen freizuhaltenden Flächen und/oder Räume mit einer für Schädlinge wirksamen Menge der Wirkstoffkombination gemäß Anspruch 1 behandelt.

17. Verfahren zur Bekämpfung von Schädlingen gemäß Anspruch 16, dadurch gekennzeichnet, daß man es zur Bekämpfung von Insekten und Spinnentieren anwendet.

18. Verwendung der Wirkstoffkombination gemäß Anspruch 1 zur Bekämpfung von Schädlingen.

19. Verwendung der Wirkstoffkombination gemäß Anspruch 1, zur Bekämpfung von Insekten und Spinnentieren.

20. Verwendung eines Schwefel-Sprühgranulats zur Herstellung von Schädlingsbekämpfungsmitteln gemäß Anspruch 1.

21. Verwendung eines Pyrethroids zur Herstellung von Schädlingsbekämpfungsmitteln gemäß Anspruch 1.

22. Schädlingsbekämpfungsmittel, enthaltend die Wirkstoffkombination gemäß Anspruch 1 neben üblichen Trägerstoffen.

## Claims

1. A pesticide comprising an active ingredient combination composed of
a) sulfur spray granules
and
b) a pyrethroid.

2. A pesticide as claimed in claim 1 which comprises one or more pyrethroids selected from among the following group:
| | | | |
|---|---|---|---|
| permethrin, | fenvalerate, | esfenvalerate, | cypermethrin, |
| alphacypermethrin, | deltamethrin, | fenpropathrin, | fluvalinate, |
| flucythrinate, | cyfluthrin, | acrinathrin, | tralomethrin, |
| cycloprothrin, | lambdacyhalothrin, | tefluthrin, | bifenthrin, |
| transfluthrin, | zeta-cypermethrin, | fubfenprox, | flufenprox. |

3. A pesticide as claimed in claim 1, which comprises 0.1 to 100 % by weight of active ingredient combination.

4. A pesticide as claimed in claim 1, wherein the weight ratio of the sulfur spray granules a) to the pyrethroid b) is 1000:0.1 to 1000:500.

5. A pesticide as claimed in claim 1, wherein sulfur melt spray granules are used as component a).

6. A pesticide as claimed in claim 1, wherein sulfur spray granules made from suspended sulfur are used as component a).

7. A pesticide as claimed in claim 1, wherein the active ingredient combination is obtained by mixing the sulfur spray granules with pulverulent pyrethroid fixed on an inert carrier.

8. A pesticide as claimed in claim 1, wherein the active ingredient combination is obtained by spraying the pyrethroid as such or the pyrethroid which is dissolved in an organic solvent onto the sulfur spray granules.

9. A pesticide as claimed in claim 8, wherein the pyrethroid, or the pyrethroid dissolved in an organic solvent, is sprayed onto the sulfur spray granules together with other adjuvants.

10. A pesticide as claimed in claim 1, wherein the active ingredient combination is obtained by spraying the pyrethroid in emulsion form onto the sulfur spray granules.

11. A process for the preparation of the pesticide as claimed in claim 1, wherein the pulverulent pyrethroid, fixed to a carrier material, is applied to the sulfur spray granules.

12. A process as claimed in claim 11 for the preparation of the pesticide as claimed in claim 1, wherein the pyrethroid fixed to the carrier material is obtained in such a manner that the pyrethroid, as such or as a solution in an organic solvent, is sprayed onto the carrier material.

13. A process for the preparation of the pesticide as claimed in claim 1, wherein the pyrethroid, as such or as a solution in an organic solvent, is sprayed onto the sulfur spray granules.

14. A process for the preparation of the pesticide as claimed in claim 1, wherein the pyrethroid in emulsion form is sprayed onto the sulfur spray granules.

15. A process for the preparation of the pesticide as claimed in claim 1, wherein a suspension of pulverulent sulfur together with pyrethroid is sprayed to give pyrethroid-comprising sulfur spray granules.

16. A method of controlling pests, which comprises treating the pests and/or the areas and/or spaces to be kept free from pests with a pesticidally active amount of the active ingredient combination as claimed in claim 1.

17. A method of controlling pests as claimed in claim 16, which is used for the control of insects and arachnids.

18. The use of the active ingredient combination as claimed in claim 1 for controlling pests.

19. The use of the active ingredient combination as claimed in claim 1 for controlling insects and arachnids.

20. The use of sulfur spray granules for the preparation of pesticides as claimed in claim 1.

21. The use of a pyrethroid for the preparation of pesticides as claimed in claim 1.

22. A pesticide comprising the active ingredient combination as claimed in claim 1 in addition to customary carriers.

## Revendications

1. Produit parasiticide contenant une combinaison de substances actives consistant en
a) des granulés d'atomisation de soufre
et
b) un pyréthroïde.

2. Produit parasiticide selon la revendication 1, caractérisé par le fait qu'il contient un ou plusieurs pyréthroïdes choisis dans le groupe suivant :
| | | | |
|---|---|---|---|
| Permethrin, | Fenvalerate, | Esfenvalerate, | Cypermethrin, |
| Alphacypermethrin, | Deltamethrin, | Fenpropathrin, | Fluvalinate, |
| Flucythrinate, | Cyfluthrin, | Acrinathrin, | Tralomethrin, |
| Cycloprothrin, | Lambdacyhalothrin, | Tefluthrin, | Bifenthrin, |
| Transfluthrin, | Zeta-Cypermethrin, | Fubfenprox, | Flufenprox. |

3. Produit parasiticide selon la revendication 1, caractérisé par le fait qu'il contient de 0,1 à 100 % en poids de la combinaison de substances actives.

4. Produit parasiticide selon la revendication 1, caractérisé par le fait que les proportions relatives en poids entre les granulés d'atomisation de soufre a) et le pyréthroïde b) vont de 1000 : 0,1 à 1000 : 500.

5. Produit parasiticide selon la revendication 1, caractérisé par le fait que l'on utilise en tant que composant a) des granulés d'atomisation de soufre à l'état fondu.

6. Produit parasiticide selon la revendication 1, caractérisé par le fait que l'on utilise en tant que composant a) des granulés d'atomisation de soufre préparés à partir de soufre en suspension.

7. Produit parasiticide selon la revendication 1, caractérisé par le fait que l'on obtient la combinaison de substances actives par mélange des granulés d'atomisation de soufre avec le pyréthroïde à l'état pulvérulent fixé sur un support inerte.

8. Produit parasiticide selon la revendication 1, caractérisé par le fait que l'on obtient la combinaison de substances actives par atomisation du pyréthroïde tel quel ou du pyréthroïde en solution dans un solvant organique sur les granulés d'atomisation de soufre.

9. Produit parasiticide selon la revendication 8, caractérisé par le fait que l'atomisation du pyréthroïde ou du pyréthroïde en solution dans un solvant organique sur les granulés d'atomisation de soufre est réalisée avec d'autres adjuvants.

10. Produit parasiticide selon la revendication 1, caractérisé par le fait que l'on obtient la combinaison de substances actives par atomisation du pyréthroïde à l'état d'émulsion sur les granulés d'atomisation de soufre.

11. Procédé de préparation du produit parasiticide selon la revendication 1, caractérisé par le fait que l'on applique le pyréthroïde à l'état pulvérulent, fixé sur une matière de support, sur les granulés d'atomisation de soufre.

12. Procédé selon la revendication 11 pour la préparation du produit parasiticide selon la revendication 1, caractérisé par le fait que l'on obtient le pyréthroïde fixé sur la matière de support en atomisant le pyréthroïde tel quel ou à l'état de solution dans un solvant organique, sur la matière de support.

13. Procédé pour la préparation du produit parasiticide selon la revendication 1, caractérisé par le fait que l'on atomise le pyréthroïde tel quel ou à l'état de solution dans un solvant organique sur les granulés d'atomisation de soufre.

14. Procédé pour la préparation du produit parasiticide selon la revendication 1, caractérisé par le fait que l'on atomise le pyréthroïde à l'état d'émulsion sur les granulés d'atomisation de soufre.

15. Procédé de préparation du produit parasiticide selon la revendication 1, caractérisé par le fait que l'on atomise une suspension comme du soufre et du pyréthroïde à l'état pulvérulent, formant ainsi des granulés d'atomisation de soufre qui contiennent le pyréthroïde.

16. Procédé pour combattre les parasites, caractérisé par le fait que l'on traite les parasites et/ou les aires et/ou locaux à protéger contre les parasites par une quantité efficace à l'égard des parasites de la combinaison de substances actives de la revendication 1.

17. Procédé pour combattre les parasites selon la revendication 16, caractérisé par le fait qu'on l'exploite pour combattre les insectes et les arachnides.

18. Utilisation de la combinaison de substances actives selon la revendication 1 pour la lutte contre les parasites.

19. Utilisation de la combinaison de substances actives selon la revendication 1 pour la lutte contre les insectes et les arachnides.

20. Utilisation de granulés d'atomisation de soufre pour la préparation de produits parasiticides selon la revendication 1.

21. Utilisation d'un pyréthroïde pour la préparation de produits parasiticides selon la revendication 1.

22. Produit parasiticide contenant la combinaison de substances actives selon la revendication 1 avec des véhicules usuels.
